# EUROPÄISCHE PATENTSCHRIFT

(11) **EP 3 184 886 B1**
(45) Veröffentlichungstag und Bekanntmachung des Hinweises auf die Patenterteilung: **20.01.2021**
(21) Anmeldenummer: 16201839.4
(22) Anmeldetag: 02.12.2016
(51) Int. Cl.: F21V 8/00

(54) **LEUCHTVORRICHTUNG MIT EINER LICHTLEITERPLATTE**
LIGHTING DEVICE COMPRISING A LIGHT GUIDE PLATE
DISPOSITIF D'ÉCLAIRAGE AVEC UNE PLATINE GUIDE OPTIQUE

(30) Priorität: 22.12.2015 DE 102015122498
(43) Veröffentlichungstag der Anmeldung: 28.06.2017
(73) Patentinhaber: REHAU AG + Co, 95111 Rehau (DE)
(72) Erfinder: Goldstein, Jörg, 95028 Hof (DE); Schmidt, Steven, 95182 Döhlau (DE); Eibl, Stefan, 95028 Hof (DE)

(56) Entgegenhaltungen:
- WO-A1-2015/053085
- DE-A1-102014 117 989
- US-A1- 2011 176 086
- US-A1- 2014 168 564
- US-A1- 2015 124 177

## Beschreibung

### Hintergrund der Erfindung

Die vorliegende Erfindung betrifft eine Leuchtvorrichtung mit einer Lichtleiterplatte. Leuchtvorrichtungen der eingangs genannten Art weisen meist wenigstens eine Leuchtdiode bzw. besonders bevorzugt eine Mehrzahl von Leuchtdioden zum Erzeugen von in die Lichtleiterplatte einkoppelnden Lichts auf. Das eingekoppelte Licht wird über Auskoppel-mittel - die meist in Form von Streukörpern ausgebildet sind, die in der Lichtleiterplatte aufgenommen sind - durch die Lichtaustrittsfläche hindurch in die Umgebung ausgekoppelt.

Eine Leuchtvorrichtung der eingangs genannten Art ist insbesondere aus der EP 2 924 349 A1 bekannt, wobei diese bekannte Leuchtvorrichtung auch einen Reflektor mit einem Topfabschnitt aufweist, der in dem von dem Rahmen umgrenzten Durchgang angeordnet ist. Der Reflektor weist zusätzlich zu dem Topfabschnitt auch einen Auflagerand auf, der auf eine umlaufende Außenfläche des Rahmens aufgelegt ist. In der EP 2 924 349 A1 wird auch dargelegt, dass der Reflektor die Torsionssteifigkeit und damit die mechanische Stabilität der Leuchte erhöhen soll. Da der Auflagerand lediglich auf einer umlaufenden Außenfläche des Rahmens aufgelegt ist, ist jedoch fraglich wie der aus der EP 2 924 349 A1 bekannte Reflektor die Torsionssteifigkeit und mithin die mechanische Stabilität wesentlich erhöhen soll.

Weitere Leuchtvorrichtungen sind aus der DE 20 2011 000 598 U1, der DE 20 2012 011 498 U1, der US 2012/0236597 A1 und der DE 10 2012 019 522 A1 bekannt. Aus der DE 20 2015 101 214 U1 sind ein Leuchtenprofilrahmen und Winkelverbinder bekannt.

Aus der US 2014/0168564 A1 ist eine gekrümmte Flüssigkeitskristall-Anzeigevorrichtung bekannt. Es ist aus diesem Dokument nicht bekannt, eine Leuchtvorrichtung mit einem Versteifungselement vorzusehen, dass einen umlaufenden Randbereich aufweist, welcher mit einer umlaufenden Außenfläche eines umlaufenden Rahmens flächig und stoffschlüssig verbunden ist. Aus diesem Dokument ist auch nicht bekannt, ein Versteifungselement vorzusehen, das einen mittleren Bereich umfasst, der in einem von dem Rahmen umgrenzten Durchgang aufgenommen ist.

### Zugrundeliegende Aufgabe

Es ist Aufgabe der Erfindung, eine Leuchtvorrichtung mit einer Lichtleiterplatte anzugeben, die eine gegenüber den bekannten Lösungen erhöhte mechanische Stabilität aufweist.

### Erfindungsgemäße Lösung

Diese Aufgabe wird erfindungsgemäß mit einer Leuchtvorrichtung mit den Merkmalen des unabhängigen Anspruchs 1 gelöst.

Die erfindungsgemäße Leuchtvorrichtung umfasst eine Lichtleiterplatte, wenigstens eine Leuchtdiode zum Erzeugen von in die Lichtleiterplatte einkoppelnden Lichts bzw. zum Erzeugen von in die Lichtleiterplatte einstrahlenden Lichts, einem umlaufenden Rahmen und ein Versteifungselement. Der Rahmen der erfindungsgemäßen Leuchtvorrichtung umgrenzt einen Durchgang bzw. einen Bereich bzw. einen Innenbereich. Bei der erfindungsgemäßen Leuchtvorrichtung ist ein umlaufender Randabschnitt der Lichtleiterplatte in dem Rahmen aufgenommen und die Lichtleiterplatte weist eine umlaufende Seitenfläche und wenigstens eine Lichtaustrittsfläche auf. Die umlaufende Seitenfläche ist an dem umlaufenden Randabschnitt vorgesehen.

Bei der erfindungsgemäßen Leuchtvorrichtung trifft das von der Leuchtdiode erzeugbare Licht zum Einkoppeln bzw. Einstrahlen in die Lichtleiterplatte auf die umlaufende Seitenfläche der Lichtleiterplatte (bzw. das von der Leuchtdiode erzeugbare Licht strahlt zum Einkoppeln bzw. Einstrahlen auf die umlaufende Seitenfläche). Ferner ist wenigstens ein Mittel zum Auskoppeln des von der umlaufenden Seitenfläche in die Lichtleiterplatte eingekoppelten Lichts durch die Lichtaustrittsfläche hindurch bzw. aus der Lichtaustrittsfläche heraus vorgesehen.

Die erfindungsgemäße Leuchtvorrichtung zeichnet sich insbesondere dadurch aus, dass sie ein Versteifungselement mit einem umlaufenden Randbereich und einem mittleren Bereich aufweist, wobei der umlaufende Randbereich mit einer umlaufenden Außenfläche des Rahmens flächig und stoffschlüssig verbunden ist bzw. abschnittweise flächig und stoffschlüssig verbunden ist, und wobei der mittlere Bereich (bzw. ein Endabschnitt des mittleren Bereichs) in dem Durchgang aufgenommen ist bzw. wobei der mittlere Bereich (bzw. ein Endabschnitt des mittleren Bereichs) in einem Endabschnitt des Durchgangs aufgenommen ist.

Mittels des erfindungsgemäßen Versteifungselements kann vorteilhaft die mechanische Stabilität der Lichtleiterplatte gegenüber den bekannten Lösungen erhöht werden, und zwar infolge der mit dem Versteifungselement bewirkten erhöhten mechanischen Versteifung des Rahmens. Die erhöhte mechanische Versteifung kann das Versteifungselement insbesondere vorteilhaft dadurch bewirken, dass sein umlaufender Randbereich mit der umlaufenden Außenfläche des Rahmens flächig und stoffschlüssig verbunden ist bzw. wenigstens abschnittsweise flächig und stoffschlüssig verbunden ist. Eine weitere Erhöhung der mechanischen Versteifung des Rahmens ist vorteilhaft dadurch bewirkt, dass der mittlere Bereich des Versteifungselements in dem Durchgang aufgenommen ist bzw. dass ein Endabschnitt des mittleren Bereichs in dem Durchgang aufgenommen ist. Der in dem Durchgang aufgenommene mittlere Bereich wirkt einer Verbiegung vorteilhaft wirksam entgegen.

Bei dem Versteifungselement kann es sich besonders vorteilhaft um ein Versteifungselement handeln, das aus einem metallischen Material und/oder Kunststoffmaterial und/oder aus einer Mischform von metallischem Material und Kunststoffmaterial besteht. Dieses Material kann ausgewählt sein aus: Edelstahl, Aluminium, Magnesium, Stahl, Kupfer, Titan, Zink, Metalldünnblechmaterial (Metallspritzguss, tiefgezogen).

Das Kunststoffmaterial aus dem das Versteifungselement besteht, umfasst vorzugsweise Homo- und /oder Copolymere und/oder Mischungen von Homo- und /oder Copolymeren. Das Kunststoffmaterial kann unvernetzt, teilweise vernetzt oder vollständig vernetzt vorliegen.

Das Kunststoffmaterial aus dem das Versteifungselement besteht, umfasst besonders bevorzugt Polyamid und/oder Polyethylenterephthalat und/oder Polybutylenterephthalat und/oder Acrylatharz und/oder Acrylatcopolymer (EBA, EMA) und/oder Polymethyl(meth)acrylat und/oder Poly(meth)acrylat und/oder Polycarbonat und/oder Blends aus Polycarbonat und Acrylester-styrol-acrylnitril und/oder einem Blend aus Polycarbonat und Acrylnitirl-butadien-styrol und/oder Polyurethanen und/oder Polyolefine und/oder Polyvinylchlorid und/oder Polystyrol und/oder Polystyrol-Copolymer und/oder Methylmethacrylat-Acrylnitril-Butadien-Styrol-Copolymer und/oder Acrylester-Styrol-Acrylnitril-Copolymer und/oder Styrol-Acrylnitril-Copolymer und/oder Styrol-Methylmethacrylat-Copolymer und/oder Fluorhomopolymer und/oder Fluorcopolymer und/oder Polyetherimid und/oder Polyamidimid und/oder Polyimid und/oder thermoplastisches Polyimid und/oder Polyphthalamid und/oder Polyketon und/oder Polyetherketon und/oder Polyetheretherketon und/oder Polyetherketonketon und/oder Polyaryletherketon und/oder Polyacetal (POM) und/oder Polyether und/oder Polyphenylenoxid und/oder Polyphenylensulfid und/oder flüssigkristallinem Polymer und/oder Polyphenylensulfon und/oder Polysulfon und/oder Polyethersulfon und/oder Polymere aus nachwachsenden Rohstoffen und/oder Hochleistungsthermoplaste.

Das Kunststoffmaterial aus dem das Versteifungselement besteht, kann insbesondere Füllstoffe wie Brand- und Flammschutzadditive, Pigmentierung Glasfasern, Kohlenstofffasern, Fasern aus nachwachsenden Rohstoffen sowie Glasbubbles enthalten.

Besonders bevorzugt kann es sich bei dem Versteifungselement um ein einstückiges Versteifungselement aus einem Kunststoffmaterial handeln, das vorzugsweise ein spritzgegossenes oder extrudiertes oder tiefgezogenes oder gepresstes oder thermogeformtes Versteifungselement ist.

Die flächige stoffschlüssige Verbindung zwischen der umlaufenden Außenfläche des Rahmens und dem umlaufenden Randbereich bzw. dem umlaufenden Randabschnitt des Versteifungselements kann insbesondere eine Klebverbindung (thermisch/chemisch) oder eine Schweißverbindung sein. Sofern sowohl der Rahmen als auch das Versteifungselement aus einem Kunststoffmaterial bestehen, kann die stoffschlüssige Verbindung insbesondere auch eine Kunststoffschweißverbindung sein.

Besonders bevorzugt erstreckt sich die flächige und stoffschlüssige Verbindung zwischen der umlaufenden Außenfläche des Rahmens und dem umlaufenden Randbereich des Versteifungselements umlaufend entlang der umlaufenden Außenfläche des Rahmens, wodurch eine sehr stabile Verbindung realisiert werden kann.

Der umlaufende Randbereich ist mit einer umlaufenden Außenfläche des Rahmens flächig und stoffschlüssig verbunden bzw. der umlaufende Randbereich weist wenigstens eine flächige und stoffschlüssige Verbindung zu der umlaufenden Außenfläche des Rahmens auf bzw. eine umlaufende Randbereich-Fläche des umlaufenden Randbereichs weist wenigstens eine flächige und stoffschlüssige Verbindung zu der umlaufenden Außenfläche des Rahmens auf. Insbesondere können abschnittsweise mehrere dieser Verbindungen vorgesehen sein, wobei diese Verbindungen z.B. in Form von Längsstreifen oder Querstreifen ausgebildet sein können oder auch punktuell ausgebildet sein können.

Mittels einer flächigen und stoffschlüssigen Verbindung kann zusätzlich zur Steifigkeit auch eine mediendichte Versiegelung, insbesondere gegenüber Staub und Feuchtigkeit, realisiert werden.

Eine den umlaufenden Randbereich mit der umlaufenden Außenfläche des Rahmens flächig und stoffschlüssig verbindende Verbindungsschicht kann z.B. 10 µm - 500 µm dick sein. Die Verbindungsschicht kann z.B. durch Siebdruck, mittes einer Auftragsdüse, durch Walzenauftrag oder durch Sprühen aufgebracht sein. Oder es kann eine zur Ausbildung der Verbindungsschicht vorgesehene Beschichtung bereits auf dem umlaufenden Randbereich des Versteifungselements vorhanden sein, wobei die Beschichtung bei der Herstellung des Versteifungselements als Coextrusionsschicht oder als Folienlaminat oder als Cospritzgussschicht vorgefertigt werden kann.

Die Verbindungsschicht kann insbesondere auch durch eine Klebefolie oder ein Klebeband realisiert werden.

Bei einer bevorzugten Ausführungsform der erfindungsgemäßen Leuchtvorrichtung ist der mittlere Bereich des Versteifungselements in dem Durchgang kraftschlüssig aufgenommen. Durch die kraftschlüssige Aufnahme kann eine sehr stabile Verbindung zwischen dem mittleren Bereich des Versteifungselements und dem Rahmen realisiert werden, einhergehend mit der Realisierung einer sehr hohen mechanischen Stabilität der Leuchtvorrichtung. Insbesondere kann der mittlere Bereich in dem Durchgang klemmend gehalten sein.

Bei einer weiteren bevorzugten Ausführungsform der erfindungsgemäßen Leuchtvorrichtung weist der mittlere Bereich des Versteifungselements eine umlaufende Außenfläche bzw. eine umlaufende Fläche auf, wobei die umlaufende Außenfläche bzw. die umlaufende Fläche flächig und stoffschlüssig mit einer Innenfläche des Rahmens verbunden ist bzw. mit einer umlaufenden Innenfläche des Rahmens verbunden ist. Insbesondere durch die bei dieser weiteren bevorzugten Ausführungsform vorgesehene flächige und stoffschlüssige Verbindung der umlaufenden Außenfläche des mittleren Bereichs mit einer umlaufenden Innenfläche des Rahmens bzw. mit einer Innenfläche des Rahmens - welche den Durchgang bzw. einen Abschnitt des Durchgangs umgrenzt bzw. begrenzt - kann eine sehr stabile Verbindung zwischen dem mittleren Bereich und dem Rahmen realisiert werden, einhergehend mit der Realisierung einer sehr hohen mechanischen Stabilität der Leuchtvorrichtung. Besonders bevorzugt erstreckt sich die flächige stoffschlüssige Verbindung zwischen der Außenfläche und der umlaufenden Innenfläche umlaufend entlang der umlaufenden Innenfläche des Rahmens, wodurch eine sehr stabile Verbindung realisiert werden kann. Durch die flächige und stoffschlüssige Verbindung kann insbesondere auch eine mediendichte und hermetische Kapselung der Leuchtvorrichtung realisiert werden, einhergehend mit der Schaffung eines wirksamen Schutzes gegenüber äußeren schädigenden Medien, und auch einhergehend mit der Schaffung eines wirksamen Schutzes der Umgebung gegenüber Gasen, die bei einem Brandfall in der Leuchtvorrichtung entstehen können.

Bei einer praktischen Ausführungsform der erfindungsgemäßen Leuchtvorrichtung weist der mittlere Bereich eine Vertiefung auf, wobei die umlaufende Außenfläche bzw. die umlaufende Fläche des Versteifungselements an einer Wandung des Versteifungselements vorgesehen ist, welche die Vertiefung begrenzt bzw. wobei die umlaufende Außenfläche bzw. die umlaufende Fläche eine Außenfläche bzw. Fläche der die Vertiefung umgrenzende bzw. begrenzende Wandung ist bzw. wobei die umlaufende Außenfläche bzw. die umlaufende Fläche eine Teilfläche der gesamten Außenfläche bzw. der gesamten Fläche der die Vertiefung umgrenzenden bzw. begrenzenden Wandung ist. Ein gemäß dieser praktischen Ausführungsform ausgebildetes Versteifungselement kann auf einfache und praktische Weise z.B. aus einem plattenförmigen Kunststoffmaterial durch Tiefziehen hergestellt werden, so dass die Leuchtvorrichtung vorteilhat in sehr flacher Bauweise ausgeführt werden kann. Ferner bringt ein aus einem plattenförmigen Kunststoffmaterial gebildetes Versteifungselement den Vorteil mit sich, dass es mit einer konstanten Dicke bzw. mit einer gleichbleibenden Dicke ausgebildet ist (bzw. im wesentlichen mit einer konstanten Dicke bzw. im wesentlichen mit einer gleichbleibenden Dicke ausgebildet ist), was sich vorteilhaft auf die Stabilität und auch auf das optische Erscheinungsbild auswirkt. Der mittlere Bereich mit der Vertiefung kann insbesondere wannenförmig oder topfförmig ausgebildet sein.

In einer besonderen Ausführung der Erfindung kann das Versteifungselement im Bereich der Vertiefung insbesondere gesickt und / oder gerippt und / oder ausgefacht ausgeführt sein. Dadurch kann die Stabilität der Leuchtvorrichtung vorteilhaft verbessert werden.

Sofern sowohl der Rahmen als auch das Versteifungselement aus einem Kunststoffmaterial bestehen, kann durch geeignete Wahl des Kunststoffmaterials besonders vorteilhaft auch eine gebogene bzw. gewölbte Leuchtvorrichtung hergestellt werden. Ferner bietet Kunststoff den Vorteil einer möglichen Gewichtreduktion, Einfärbbarkeit, Dekorierbarkeit, sowie einfacher 3D-Formbarkeit.

Bei einer weiteren bevorzugten Ausführungsform der erfindungsgemäßen Leuchtvorrichtung weist die Leuchtvorrichtung eine umlaufende Dichtung auf, die einen umlaufenden flächigen Kontakt zu der Lichtaustrittsfläche und einen umlaufenden flächigen Kontakt zu dem Rahmen aufweist. Durch die Dichtung, die vorzugsweise aus einem Kunststoffmaterial oder einem Gummi bzw. Gummimaterial besteht, kann vorteilhaft ein Eindringen von Flüssigkeit über den Bereich zwischen einer Lichtleiterplatten-Seite mit der Lichtaustrittsfläche und dem Rahmen vermieden werden. Insbesondere kann die Dichtung stoffschlüssig mit der Lichtleiterplatte verbunden sein.

Die Dichtung kann aus einem Werkstoff mit einem Brechungsindex gefertigt sein, der kleiner ist als der der Lichtleiterplatte. Durch diesen Brechungsindexunterschied kann vorteilhafterweise eine erhöhte Lichtauskopplung an der Berührfläche zwischen Dichtung und Lichtleiterplatte vermieden werden.

Das Kunststoffmaterial aus dem die Dichtung hergestellt ist, umfasst vorzugsweise thermoplastische Elastomere, welche als Homo- und / oder Copolymere vorliegen, und zwar ausgewählt aus TPO = Thermoplastische Elastomere auf Olefinbasis, TPV = Vernetzte thermoplastische Elastomere auf Olefinbasis, TPU = Thermoplastische Elastomere auf Urethanbasis, TPE-E = Thermoplastische Polyesterelastomere, TPE-S = Styrol-Blockcopolymere (SBS, SEBS, SEPS, SEEPS und MBS), TPE-A = Thermoplastische Copolyamide, z.B. PEBAX, und/oder Silikone und/oder Polyolefinhomo- und / oder Polyolefincopolymere und/oder cyclische Polyolefincopolymere (COC, COP) und/oder Poly-alpha-Olefin-Copolymere und/oder Polyolefinelastomere und/oder lonomere und/oder Polyvinylchlorid und/oder Polyamide und/oder Acrylatharze und/oder Acrylatcopolymere (EBA, EMA) und/oder Polyurethane und/oder Fluorhomopolymere und/oder Fluorcopolymer und/oder fluorhaltige Polyurethane.

Das Kunststoffmaterial aus dem die Dichtung hergestellt ist, kann Additive, z.B. Füllstoffe, Brand- und Flammschutzadditive und Pigmente enthalten.

In Ergänzung oder alternativ zur Dichtung kann im Rahmen ein umlaufendes Auflageelement vorgesehen sein, an dem die Lichtleiterplatte anliegt bzw. auf welcher die Lichtleiterplatte aufliegt, wobei die Lichtleiterplatte besonders bevorzugt mit dem Auflageelement flächig und stoffschlüssig verbunden ist. Das Auflageelement kann aus einem Werkstoff mit einem Brechungsindex gefertigt sein, der kleiner ist als der der Lichtleiterplatte. Durch diesen Brechungsindexunterschied kann vorteilhafterweise eine erhöhte Lichtauskopplung an der Berührfläche zwischen Auflageelement und Lichtleiterplatte vermieden werden. Das Auflageelement kann insbesondere eine Dicke innerhalb eines Bereichs von 1 µm - 0,5 mm und eine Breite innerhalb eines Bereichs von 1 mm - 5 mm aufweisen.

Das Auflageelement kann bevorzugt wenigstens eine Polymerschicht und/oder eine Klebeschicht und/oder eine Sol-Gel-Schicht und/oder eine Lackschicht sein. Ebenso kann das Auflageelement durch ein physikalisches Beschichtungsverfahren aufgebracht worden sein.

Das Auflageelement kann aus einer Kombination aus Polymer- und/oder Klebeschicht und/oder Sol-Gel-Schicht und/oder Schichten, die mittels eines physikalischen Beschichtungsverfahrens erzeugt wurden, bestehen.

Ebenso kann das Auflageelement geschäumt sein und einen Porendurchmesser im Bereich 5 nm bis 20 µm aufweisen. Besonders bevorzugt sind nanoporöse Schäume mit Porendurchmesser 5 nm bis 500 nm.

Ist das Auflageelement eine Polymerschicht, so kann diese aus thermoplastischen Elastomer, welches als Homo- und / oder Copolymer vorliegt, bestehen, und zwar ausgewählt aus TPO = Thermoplastische Elastomere auf Olefinbasis, TPV = Vernetzte thermoplastische Elastomere auf Olefinbasis, TPU = Thermoplastische Elastomere auf Urethanbasis, TPE-E = Thermoplastische Polyesterelastomere, TPE-S = Styrol-Blockcopolymere (SBS, SEBS, SEPS, SEEPS und MBS), TPE-A = Thermoplastische Copolyamide, z.B. PEBAX, Fluorhomopolymer,Fluorcopolymer, fluorhaltiges Polyurethan, Silikonen, Silikon-Urethan-Copolymeren oder Silikon-Polyharnstoff-Copolymeren fluorhaltigen Silikonen, Polyolefinhomo- und / oder Polyolefincopolymeren, cyclische Polyolefincopolymeren (COC, COP), Poly-alpha-Olefin-Copolymeren, Polyolefinelastomeren, lonomeren, amorphe Poly-alpha-Olefine, haftungsmodifizierten Polyolefinen oder Polyolefin-Copolymeren, Haftungsmodifizierte Polyolefine sind mit Maleinsäureanhydrid oder Glycidylmethacrylat funktionalisiertes Polypropylen oder Polyethylene oder Ethylenvinylacetat. Die Polyolefin-Copolymere können ausgewählt sein aus bzw. umfassen Ethylenvinylacetat oder Ethylen-Acrylatcopolymere, wie beispielsweise Ethylen-Ethylacrylat oder Ethylen-Butylacryltat- oder Ethylen-Metylacrylat-Copolymere oder Polyvinylchlorid, Polyamid, Acrylatharz, Acrylatcopolymer (EBA, EMA), Polyurethan, fluorhaltigen Polyurethanen.

Um eine ausreichende Haftung des Auflageelements zur Lichtleiterplatte zu erreichen, können die Fluorhomopolymere und/oder Fluorcopolymere mit Amino- und/oder Imino- und/oder Amido- und/oder Epoxy- und/oder Hydroxy- und/oder Carbonsäure- und/oder Sulfonsäure- und/oder Methacrylsäure- und/oder Maleinsäureanhydridgruppen modifiziert sein. Die Fluorhomopolymere und/oder Fluorcopolymere können aber auch dehydrofluorierte Fluorpolymere sein.

Besonders bevorzugt sind Zusammensetzungen mit einem glycidylmethacrylatfunktionalisierten ETFE, ETFE-g-GMA, oder einem glycidylmethacrylatfunktionalisierten THV, THV-g-GMA.

Wenn das Auflageelement eine Klebeschicht ist, so umfasst diese vorzugsweise wenigstens ein Bindemittel, ausgewählt aus bzw. aufweisend Polyvinylalkohol und/oder Polyvinylbutyral und/oder Polyvinylpyrrolidon und/oder Polyethylenvinylacetat-copolymeren und/oder Polyvinylacetat und/oder Acrylaten und/oder Methacrlyaten und/oder Urethanen und/oder Polyestern und/oder Polyethern und/oder Urethanacrylaten und/oder Cyanmethylacrylaten und/oder Cyanoethylacrylaten und/oder Cyanomethylmethacrylaten und/oder Cyanoethylmethacrylaten und/oder (Meth)acrylsäurederivaten und/oder Polymethylmethacrylat und/oder Epoxyharzen und/oder Silikonen und/oder Silikoncopolymeren und/oder Fluorpolymeren und/oder lineare oder verzweigte Vinylhydrogenpolysiloxanen und/oder Mischungen hiervon.

Ist das Auflageelement eine Sol-Gel-Schicht, so weist diese wenigstens eine Silanverbindung und/oder eine Fluorsilikatverbindung und/oder einen Kieselsäureester auf.

Die Silanverbindung kann ausgewählt sein aus bzw. die Silanverbindung kann umfassen Allyltrialkoxysilane und/oder Allyldialkoxysilane und/oder Allylmonoalkoxysilane und/oder Undecenyltrialkoxysilane und/oder Vinyltrialkoxysilane und/oder Vinyldialkoxysilane und/oder Vinylmonoalkoxysilan und/oder Tetraalkoxysilan und/oder Trialkoxysilan und/oder Glcidyloxypropylalkoxysilan und/oder Carbamate und/oder Aminosilane und/oder 3-Mercaptopropyltrialkoxysilane und/oder, Fluorsilane. Beispiele hierfür sind Vinyltrimethoxysilan und/oder Vinyltriethoxysilan und/oder Vinyltriisopropoxysilan und/oder Vinyltributoxysilan und/oder Vinyl-tris(2-methoxyethoxy)silan und/oder Vinyl-tris(2-ethoxyethoxy)silan und/oder Vinyldimethylmethoxysilan und/oder Vinyldimethoxysilan und/oder Vinylphenyldimethoxysilan und/oder Vinylphenyldiethoxysilan und/oder Vinyldiethoxysilan und/oder Vinylmethyldiethoxysilan und/oder Vinylphenylmethylmethoxysilan und/oder Allyltrimethoxysilan und/oder Allyldimethoxysilan und/oder Allylmethyldimethoxysilan und/oder Allyltriethoxysilan und/oder Allyldimethoxysilan und/oder Allylmethyldimethoxysilan und/oder Allyldiethoxysilan und/oder Allylmethyldiethoxysilan und/oder Undecenyltrimethoxysilan und/oder Allyloxyundecyltrimethoxysilan und/oder 1,3-Diallyltetramethyldisiloxan und/oder Vinyltriacetoxysilan und/oder 1,3-Divinyltetramethyldisiloxan und/oder Vinyltetramethyldisiloxan und/oder 1,3-Divinyltetraphenyldisiloxan und/oder 3-Glycidyloxypropyltrimethoxysilan und/oder 3-Glycidyloxypropyltriethoxysilan und/oder N-Trimethoxysilylmethyl-O-methyl-carbamat und/oder N-Dimethoxy(methyl)silylmethyl-O-methylcarbamat und/oder N-Methyl[3-(trimethoxysilyl)-propyl]carbamat und/oder 3-Aminopropyltrimethoxysilan und/oder N-(2-aminoethyl)-3-aminopropyltrimethoxysilan und/oder N-(n-Butyl)aminopropyltrimethoxysilan und/oder Bis(3-triethoxysilylpropyl)amin und/oder Bis(3-trimethoxysilylpropyl)amin und/oder oligomere Amino/Alkyl-Alkoxysilane und/oder Perfluoroctyltriethoxysilan und/oder Trifluorpropylsilane und/oder Polyfluoralkylsilane.

Die Fluorsilikatverbindung kann ausgewählt sein aus bzw. die Fluorsilikatverbindung kann umfassen Tris(pentafluorethyl)difluorsilikat und/oder Bis(pentafluorethyl)trifluorsilikat und/oder Tri(n-heptafluorpropyl)difluorsilikat und/oder Bis(n-heptafluorpropyl)trifluorsilikat und/oder Tris(n-nonafluorbutyl)difluorsilikat und/oder Bis(n-nonafluorbutyl)trifluorsilikat und/oder Tris(n-tridecafluorhexyl)difluorsilikat und/oder Bis(n-tridecafluorhexyl)trifluorsilikat.

Ist das Auflageelement eine Lackschicht, so weist diese vorzugsweise wenigstens ein Acrylat und/oder ein Methacrylat und/oder eine polyfunktionelle Verbindung, wie beispielsweise ethoxyliertes Trimethylolpropantri(meth)acrylat und/oder Tripropylenglycoldi(meth)acrylat und/oder Trimethylolpropantri(meth)acrylat und/oder Diethylenglycoldi(meth)acrylat und/oder Pentaerythritoltetra(meth)acrylat und/oder Pentaerythritoltri(meth)acrylat und/oder Dipentaerythritolhexa(meth)acrylat und/oder 1,6-Hexandioldi(meth)acrylat und/oder Neopentylglycoldie(meth)acrylat und o/oder Polyester(meth)acrylate und/oder fettsäuremodifizierte Polyester(meht)acrylate und/oder propoxyliertes Glyceryltri(meth)acrylat und/oder ethoxyliertes Bisphenol-A-di(meth)acrylat und/oder Isobornylacrylat und/oder aminomodifizierte Polyether(meth)acrylate und/oder aliphatische Urethan(meth)acrylate und/oder Silikon(meth)acrylate und/oder Epoxyacrylate und/oder fluorhaltige Verbindungen auf.
Beispiele für fluorhaltige Verbindungen sind fluorhaltige Homo- und/oder Copolymere mit einem Brechungsindex kleiner als 1,4, welche als Monomere Tetrafluorethylen und/oder Vinylidenfluorid und/oder Fluorethylen und/oder Hexafluorpropen und/oder Perfluor-2,2-dimethyl-1,3dioxol und/oder Fluoralkyl(meth)acrylate.

Bei den physikalischen Beschichtungsverfahren kann es sich um CVD (Chemical-Vapor-Deposition) und/oder PVD (Physical-Vapor-Deposition) und/oder PECVD (Plasma-Enhanced-Chemical-Vapor-Deposition) und/oder PICVD (Plasma-Impulse-Chemical-Vapor-Deposition)und/oder LPCVD (Low-Pressure-Chemical-Vapor-Deposition) und/oder TCVD (Thermical-Chemical-Vapor-Deposition) handeln.

Wenn das Auflageelement in Form einer Schicht, umfassend eine Klebeschicht und/oder eine Sol-Gel-Schicht und/oder eine Lackschicht, ausgebildet ist, kann diese ein thermisch und/oder chemisch und/oder strahlenhärtendes System und/oder eine Kombination hieraus sein bzw. bilden.

Chemisch härtende Systeme umfassen Polymerisationen und/oder Polyadditionsreaktionen und/oder Polykondensationsreaktionen und/oder Hydrosilylierungsreaktionen und/oder Vernetzungsreaktionen. Strahlenhärtende Systeme sind insbesondere photochemisch härtende Systeme wie UV und/oder NIR und/oder Elektronenstrahlen und/oder Mikrowellen.

Vorzugsweise enthält das Auflageelement zur Reduzierung des Brechungsindex mikro- und/oder nanoskalige Verbindungen und/oder Bestandteile, wie nanoskalige Partikel und/oder Kristalle und/oder nanoporöse Materialien, welche aus Solen und/oder Gelen und/oder Metallen und/oder Metalloxiden und/oder Metallsulfiden und/oder dotierten Metalloxiden und/oder Silikaten und/oder fluorhaltigen Verbindungen erhalten werden können und/oder Mischungen hiervon sind.

Insbesondere können mikro- und/oder nanoskalige Verbindungen und/oder Bestandteile verwendet werden, welche einen negativen Brechungsindex aufweisen.

Vorteilhaft werden die mikro- und/oder nanoskaligen Verbindungen und/oder Bestandteile zur Reduzierung des Brechungsindex der Verbindungsschicht in einer Konzentration von 0,01 - 5 Gew% und mit einer Partikelgröße kleiner als 30 µm verwendet, um den Gesamtbrechungsindex der Verbindungsschicht zu reduzieren.

Mikro- und/oder nanoskalige Verbindungen und/oder Bestandteile sind vorzugsweise ausgewählt aus bzw. umfassen vorzugsweise Magnesiumfluorid und/oder Calciumfluorid und/oder Natriumfluorid und/oder Zirkonfluorid und/oder Titanfluorid und/oder Aluminiumfluorid und/oder Zinnfluorid und/oder Aerogel und/oder pyrogener Kieselsäure und/oder polymere Hohlglaskugeln und/oder glasbasierte Hohlkugeln und/oder Zeolithe und/oder Graphen.

Die fluorhaltigen Verbindungen der Auflagefläche sind vorzugsweise ausgewählt aus bzw. umfassen vorzugsweise Fluoralkylacrylate und/oder Fluoralkylmethacrylate und/oder Fluoralkylalkohole und/oder Fluoralkylester und/oder Fluoralkylolefine und/oder Fluorsilane und/oder Fluorsilikone und/oder Fluorsilikate und/oder Mischungen hiervon.

Wie bereits oben dargelegt, kann eine stoffschlüssige Verbindung zwischen dem Rahmen und der Lichtleiterplatte über das Auflageelement realisiert werden. Hierdurch kann nicht nur die Steifigkeit nochmals erhöht werden sondern auch zusätzlich eine Dichtigkeit der Leuchtvorrichtung erzielt werden.

Bei einer praktischen Ausführungsform der erfindungsgemäßen Leuchtvorrichtung ist die Lichtleiterplatte bzw. eine Lichtleiterplatten-Außenfläche durch eine Mehrzahl von stoffschlüssigen Verbindungen mit dem Versteifungselement bzw. mit einer Versteifungselement-Fläche stoffschlüssig verbunden und durch die stoffschlüssigen Verbindungen von dem Versteifungselement bzw. der Versteifungselement-Fläche beabstandet.

Jede stoffschlüssige Verbindung kann z.B. als Schweißpunkt bzw. Schweißkörper oder in Form eines Klebpunkts bzw. Klebekörpers ausgebildet sein. Jede stoffschlüssige Verbindung kann z.B. dadurch realisiert sein, dass ein entsprechender Lack oder ein Harz oder ein Gel oder eine Dispersion oder ein Polymer bzw. eine Polymerzusammensetzung (z.B. in Form eines "Hotmelts") z.B. durch Walzenauftragstechnik oder Siebdruck oder Digitaldruck oder 3D-Druck aufgetragen ist bzw. wird.

Durch die stoffschlüssigen Verbindungen kann eine sehr stabile Verbindung zwischen der Lichtleiterplatte und dem Versteifungselement realisiert werden.

Insbesondere bei eventuellem Vorsehen großformatiger Leuchtvorrichtungen (mit Abmessungen von größer als 60 cm x 60 cm, insbesondere größer als 1 m x 1 m bzw. größer als 0,4 m x 1,2 m) kann bei eventuellem Vorsehen dünnwandiger Lichtleiterplatten (mit einer Dicke kleiner als 6 mm, vorzugsweise kleiner als 4 mm) ein Durchbiegen der Lichtleiterplatte und damit der Leuchtvorrichtung vermieden werden.

Durch die vorgesehene Beabstandung zwischen der Lichtleiterplatte und dem Versteifungselement wird vorteilhaft die Funktionsweise der Lichtleiterplatte, eine gleichmäßige Lichtverteilung und Lichtauskopplung über die Lichtaustrittsfläche zu realisieren, nicht beeinträchtigt.

Durch die obigen stoffschlüssigen Verbindungen bzw. durch die auch als Beabstandungsmittel dienenden stoffschlüssigen Verbindungen zwischen Lichtleiterplatte und Versteifungselement kann die Lichtleiterplatte genau positioniert werden. Ein Verschieben der Lichtleiterplatte ist mithin vorteilhafterweise nicht möglich. Die genaue Positionierung der Lichtleiterplatte kann zusätzlich durch die oben beschriebene stoffschlüssige Verbindung zwischen Rahmen und Versteifungselement erhöht werden. Hierdurch ist eine exakte und dauerhafte Positionierung der Lichtleiterplatte möglich. Durch diese Anordnung kann die Leuchtvorrichtung sowohl horizontal als auch vertikal montiert werden. Ganz im Unterschied hierzu liegt bei den bekannten Leuchtvorrichtungen die Lichtleiterplatte lose im Rahmen, was ggf. zu Beschädigung der Leuchtdioden und einem unerwünschten Verschieben der Platte führen kann, einhergehend mit einem negativen Einfluss auf die Homogenität der Lichtabstrahlung.

Die Klebstoffverbindungen können insbesondere auch voneinander beabstandet sein, wobei sie vorzugsweise gleichmäßig in dem Bereich zwischen der Lichtleiterplatte und dem Versteifungselement verteilt sind, einhergehend mit der Schaffung einer sehr stabilen Verbindung.

Die Größe bzw. die Ausdehnung der einzelnen stoffschlüssigen Verbindungen kann in Richtung ihrer größten Ausdehnung vorzugsweise innerhalb eines Bereichs von 2 µm bis 5 mm, besonders bevorzugt innerhalb eines Bereichs von 10 µm bis 2 mm liegen. Durch die stoffschlüssigen Verbindungen kann eine Beabstandung der Lichtleiterplatte von dem Versteifungselement innerhalb eines Bereichs von 2 µm - 0,2 mm realisiert werden. Die stoffschlüssigen Verbindungen können insbesondere auch als zusätzlich vorgesehene Mittel zum Auskoppeln des von der umlaufenden Seitenfläche in die Lichtleiterplatte eingekoppelten Lichts durch die Lichtaustrittsfläche hindurch vorgesehen sein bzw. ausgebildet sein.

Die einzelnen stoffschlüssigen Verbindungen können punktförmig oder streifenförmig oder polyedrisch ausgebildet sein bzw. punktförmig oder streifenförmig oder polyedrisch auf dem Versteifungselement und /oder der Lichtleiterplatte aufgebracht sein.

Jede stoffschlüssige Verbindung kann ein Stück Klebstoffmaterial bzw. eine zusammenhängende Klebstoffmenge umfassen, wobei das Klebstoffmaterial bzw. die Klebstoffmenge das Versteifungselement und die Lichtleiterplatte stoffschlüssig verbindet.

Jede stoffschlüssige Verbindung kann insbesondere in Form einer Klebstoffverbindung ausgebildet sein bzw. eine Klebstoffverbindung sein.

Bei der in dem oder an dem Rahmen gehaltenen Lichtleiterplatte kann es sich um eine beliebige Lichtleiterplatte handeln, die wenigstens bereichsweise oder zur Gänze lichtdurchlässig ausgebildet ist. Insbesondere kann die Lichtleiterplatte wenigstens teilweise aus einem Material bestehen, das ausgewählt ist aus einem Polycarbonat und/oder Polymethylmethacrylat und/oder Acrylatharze und/oder Methylmethacrylat-Acrylnitril-Butadien-Styrol-Copolymere und/oder Styrol-Methylmethacrylat-Copolymer und/oder Acrylester-Styrol-Acrylnitril-Copolymere und/oder Styrol-Acrylnitril-Copolymere und/oder Polystyrol und/oder Cycloolefin-Copolymere und/oder Polypropylen und/oder Silikon und/oder lonomer und/oder Polyurethan und/oder flüssigkristalline Polymere und/oder Polyamide und/oder Polyphenylensulfon und/oder Polysulfon und/oder Polyethersulfon und/oder Polyethylenterephthalat und/oder Polybutylenterephthalat und/oder einem anorganischen Glas und oder Mischungen und oder schichtweise Kombinationen hieraus.

Die Lichtleiterplatte kann auf der Lichtaustrittsseite bzw. auf der Lichtaustrittsfläche eine optische Struktur aufweisen, die eine gerichtete und/oder diffuse und/oder eine homogene Lichtabstrahlung ermöglicht.

Die Leuchtdiode bzw. die Leuchtdioden ist/sind an dem Rahmen gehalten bzw. an dem Rahmen angeordnet bzw. die Leuchtdiode bzw. die Leuchtdioden ist/sind in dem Rahmen gehalten bzw. in dem Rahmen angeordnet.

Der umlaufende Randabschnitt der Lichtleiterplatte bzw. der umlaufende Randbereich der Lichtleiterplatte ist in dem Rahmen aufgenommen bzw. angeordnet. Insbesondere kann der umlaufende Randabschnitt der Lichtleiterplatte in einer sich umlaufend um den Durchgang erstreckenden Nut des Rahmens oder in einer sich umlaufend um den Durchgang erstreckenden Aussparung des Rahmens aufgenommen sein bzw. angeordnet sein, wobei die umlaufende Nut oder die umlaufende Aussparung zum Durchgang hin offen ist bzw. wenigstens zum Durchgang hin offen ist bzw. zum Durchgang hin zugänglich ist. Der umlaufende Randabschnitt der Lichtleiterplatte kann auch in einem zu dem Durchgang hin offen Hohlraum des Rahmens aufgenommen bzw. angeordnet sein, wobei sich der Hohlraum umlaufend um den Durchgang erstreckt. Die Leuchtdiode oder die Leuchtdioden ist/sind vorzugsweise in der umlaufenden Nut oder in der umlaufenden Aussparung oder in dem umlaufenden Hohlraum aufgenommen bzw. angeordnet.

Besonders praktisch kann/können die Leuchtdiode/Leuchtdioden auf wenigstens einer Platine gehalten sein. Über die Platine können der Leuchtdiode bzw. den Leuchtdioden insbesondere z.B. Steuersignale und/oder z.B. Versorgungströme zugeführt werden. Auch die wenigstes eine Platine ist bevorzugt in der umlaufenden Nut oder in der umlaufenden Aussparung oder in dem umlaufenden Hohlraum aufgenommen bzw. angeordnet.

In der obigen umlaufenden Nut können anstelle oder zusätzlich von LED-Platinen elektrische Leiter angeordnet sein (bspw. in Form von Stromschienen). Bei eventuell vorgesehener zweiseitiger Lichteinkopplung können vorzugsweise bei eventuellem Vorliegen jeweils paarweise gegenüber angeordneter Rahmenelemente (wie insbesondere bei einem 4-seitigen Rahmen) paarweise entweder LED-Platinen oder Stromschienen aufgenommen sein.

Das von der Leuchtdiode bzw. den Leuchtdioden erzeugbare Licht trifft zum Einkoppeln bzw. Einstrahlen in die Lichtleiterplatte auf die umlaufende Seitenfläche der Lichtleiterplatte, wobei die Leuchtdiode bzw. die jeweilige Leuchtdiode hierfür eine geeignete Orientierung relativ zu der umlaufenden Seitenfläche aufweisen kann, so dass das von der Leuchtdiode erzeugte Licht ohne eine Licht-Umlenkung vornehmen zu müssen auf die umlaufende Seitenfläche trifft bzw. treffen kann. Insbesondere kann die Leuchtdiode bzw. die jeweilige Leuchtdiode eine der umlaufenden Seitenfläche zugewandte Leuchtenlicht-Austrittsfläche für von der Leuchtdiode ausgestrahltes Licht umfassen.

Besonders bevorzugt kann eine Mehrzahl von Leuchtdioden vorgesehen sein. Insbesondere können wenigstens zehn oder wenigstens zwanzig oder wenigstens vierzig Leuchtdioden vorgesehen sein, wobei die Leuchtdioden zur Erzielung eines besonders gleichmäßigen über die Lichtaustrittsfläche austretenden Flächenlichts entlang der umlaufenden Seitenfläche der Lichtleiterplatte aufeinanderfolgend angeordnet sein können bzw. entlang wenigstens eines Abschnitts der umlaufenden Seitenfläche der Lichtleiterplatte aufeinanderfolgend angeordnet sein können.

Bei dem Mittel zum Auskoppeln bzw. zum Umlenken des von der Seitenfläche in die Lichtleiterplatte eingekoppelten Lichts bzw. Leuchtdioden-Lichts durch die Lichtaustrittsfläche hindurch (bzw. aus dieser heraus) kann es sich um beliebiges Mittel handeln, welches für diese Auskopplung bzw. Umlenkung des Lichts bzw. Leuchtdioden-Lichts eingerichtet ist. Bei diesem Mittel kann es sich z.B. um eine in oder an der Lichtleiterplatte aufgenommene Reflexionsvorrichtung, wie z.B. einen Spiegel, handeln.

Bei einer bevorzugten Ausführungsform der erfindungsgemäßen Leuchtvorrichtung weist die Lichtleiterplatte eine Vielzahl von Mitteln in Form von Streukörpern zum Auskoppeln bzw. Umlenken des von der Seitenfläche in die Lichtleiterplatte eingekoppelten Lichts bzw. Leuchtdioden-Lichts durch die Lichtaustrittsfläche hindurch (bzw. aus dieser heraus bzw. aus dieser heraus in die Umgebung der Leuchtvorrichtung) auf, und zwar erfolgt das Auskoppeln durch Streuen des eingekoppelten Lichts an den Streukörpern. Bei dieser bevorzugten Ausführungsform sind also eine Vielzahl von Mitteln zum Auskoppeln bzw. Umlenken des von der Seitenfläche in die Lichtleiterplatte eingekoppelten Lichts bzw. Leuchtdioden-Lichts durch die Lichtaustrittsfläche hindurch vorgesehen, wobei die Lichtleiterplatte diese Mittel aufweist und jedes Mittel in Form eines Streukörpers ausgebildet ist.

Die vorzugsweise in der Lichtleiterplatte bzw. in dem Material der Lichtleiterplatte aufgenommenen Streukörper ermöglichen ein wirksames Auskoppeln bzw. Umlenken des von der Seitenfläche in die Lichtleiterplatte eingekoppelten bzw. eingestrahlten Lichts bzw. Leuchtdioden-Lichts durch die Lichtaustrittsfläche hindurch, wobei insbesondere durch Vorsehen einer großen Vielzahl von gleichmäßig in der Lichtleiterplatte verteilten Streukörpern ein sich über eine große Lichtaustrittsfläche erstreckender Lichtaustritt realisiert werden kann, einhergehend mit der Schaffung eines als angenehm empfundenen Lichts bzw. Flächenlichts.

Bei den Streukörpern bzw. Streupartikeln kann es sich um beliebige Streukörper bzw. Streupartikeln handeln, die dazu eingerichtet sind, die Auskopplung bzw. Umlenkung durch Streuwirkung zu bewirken bzw. zu realisieren. Die Größe bzw. die Ausdehnung der Streukörper in Richtung ihrer größten Ausdehnung liegt vorzugsweise innerhalb eines Bereichs von 20 µm bis 5 mm, besonders bevorzugt innerhalb eines Bereichs von 50 µm bis 0,5 mm. Mit derartig dimensionierten Streukörpern kann bei möglichst gleichmäßiger Verteilung der Streukörper ein sehr gleichmäßiges austretendes Licht durch die Summe der Streuwirkungen aller Streukörper geschaffen werden.

Die Streukörper können Bindemittel aufweisen. Diese Bindemittel können vorzugsweise Acrylate und/oder Urethane und/oder Polyester und/oder Polyether und/oder Urethanacrylate und/oder Cyanmethylacrylate und/oder Cyanoethylacrylate und/oder Cyanomethylethacrylate und/oder (Meth)acrylsäurederivate und/oder Epoxyharze und/oder Silikone und/oder Silikoncopolymere, wie beispielsweise Silikon-Urethan-Copolymer, Silikon-Polyharnstoff-Copolymer, Silikon-Urethanacrylat-Copolymer, und/oder lineare oder verzweigte Vinylhydrogenpolysiloxane und/oder haftungsmodifizierte Polyolefine und/oder Polyolefin-Copolymeren, wie beispielsweise lonomere oder Ethylenvinylacetat oder Ethylen-Glycidylmethacrylat-Copolymer oder Ethylen-Ethylacrylat- oder Ethylen-Butylacryltat- oder Ethylen-Methylacrylat-Copolymer, oder Butylacrylat-Methylacrylat-Copolymer oder Polyamid umfassen. Haftungsmodifizierte Polyolefine können mit Maleinsäureanhydrid oder Glycidylmethacrylat funktionalisiertes Polypropylen oder Polyethylene oder Ethylenvinylacetat sein.

Zur Realisierung eines wirksamen Auskoppeln bzw. Umlenken des von der Seitenfläche in die Lichtleiterplatte eingekoppelten bzw. eingestrahlten Lichts bzw. Leuchtdioden-Lichts kann die Lichtleiterplatte insbesondere auch in Form eines Störstellenlichtleiters mit einer Vielzahl von Störstellen ausgebildet sein.

Durch die Lichtaustrittsfläche hindurch kann das Licht bzw. Leuchtdioden-Licht in die Umgebung der Leuchtvorrichtung strahlen bzw. aus der Lichtaustrittsfläche heraus kann das Licht bzw. Leuchtdioden-Licht in die Umgebung der Leuchtvorrichtung strahlen.

Die Lichtaustrittfläche kann einer beliebigen Teilfläche der gesamten Oberfläche der Lichtleiterplatte vorgesehen sein. Insbesondere kann die Lichtaustrittsfläche bei einer Lichtleiterplatte, welche zwei entgegengesetzte Deckflächen bzw. zwei entgegengesetzte Lichtleiterplatten-Seiten bzw. zwei entgegengesetzte Großflächen und die umlaufende Seitenfläche umfasst, z.B. an einer der beiden Deckflächen bzw. Lichtleiterplatten-Seiten bzw. Großflächen vorgesehen sein. Besonders bevorzugt ist die Lichtaustrittsfläche an einer dem Versteifungselement abgewandten Teilfläche einer der beiden Deckflächen der Lichtleiterplatte vorgesehen. Es ist jedoch auch denkbar, dass das Versteifungselement lichtdurchlässig ausgebildet ist und die Lichtaustrittsfläche dem Versteifungselement zugewandt ist, so dass das aus der Lichtaustrittsfläche heraustretende Licht nach Durchstrahlen des Versteifungselements in die Umgebung der Leuchtvorrichtung strahlen kann. Jede Deckfläche bzw. Großfläche kann insbesondere rechtwinkelig zu der umlaufenden Seitenfläche orientiert sein bzw. ausgerichtet sein.

Bei einer bevorzugten Ausführungsform der erfindungsgemäßen Leuchtvorrichtung umfasst der Rahmen wenigstens drei, vorzugsweise vier oder auch mehr längliche Profilkörper, die stoffschlüssig miteinander verbunden sind, wobei jeder Profilkörper vorzugsweise zwei auf Gehrung geschnittene Stirnseiten aufweist, so dass jeweils eine Stirnseite eines Profilskörpers mit einer Stirnseite eines anderen Profilkörpers flächig und stoffschlüssig verbunden ist. Der Rahmen kann besonders bevorzugt auch aus einem einzigen Profikörper hergestellt bzw. gebildet sein, und zwar durch Faltung des Profilkörpers an vorbestimmten Stellen, die beispielsweise gekerbt oder in der Wandstärke reduziert sind.

Insbesondere können die Rahmen z.B. auch gebogen sein, so dass insbesondere auch z.B. kreisförmige oder elliptische Leuchtvorrichtungen realisiert werden können.

Der zur Aufnahme des umlaufenden Randabschnitts der Lichtleiterplatte vorgesehene umlaufende Hohlraum bzw. eine zur Aufnahme des umlaufenden Randabschnitts der Lichtleiterplatte vorgesehene umlaufende Nut bzw. Aussparung wird vorteilhaft durch die flächigen stoffschlüssigen Verbindungen der Stirnseiten wirksam abgedichtet. Bei den Profilkörpern kann es sich insbesondere um Profilkörper aus einem Kunststoffmaterial handeln, wobei das Kunststoffmaterial ausgewählt ist aus der Gruppe, die umfasst: Polyamid, Polyethylenterephthalat, Polybutylenterephthalat Acrylatharz, Acrylatcopolymer (EBA, EMA), Polymethyl(meth)acrylat, Poly(meth)acrylat Polycarbonat, Blend aus Polycarbonat und Acrylester-Styrol-Acrylnitril und/oder einem Blend aus Polycarbonat und Acrylnitirl-Butadien-Styrol und/oder Polyurethanen und/oder Polyolefinen und/oder Polystyrol und/oder Polystyrol-Copolymer und/oder Methylmethacrylat-Acrylnitril-Butadien-Styrol-Copolymer und/oder Acrylester-Styrol-Acrylnitril-Copolymer und/oder Styrol-Acrylnitril-Copolymer und/oder Styrol-Methylmethacrylat-Copolymer und/oder Fluorhomopolymer und/oder Fluorcopolymer und/oder fluorhaltiges Polyurethan und/oder Polyetherimid und/oder Polyamidimid und/oder Polyimid und/oder thermoplastisches Polyimid und/oder Polyphthalamid und/oder Polyketon und/oder Polyetherketon und/oder Polyetheretherketon, Polyetherketonketon und/oder Polyaryletherketon und/oder Polyvinylchlorid und/oder Silikon.

Der bzw jeder Profilkörper kann zudem zur Erhöhung der Steifigkeit partikel- und/oder faserverstärkt (Glasfaser, Kohlefaser, Glasbubbles) sein und ggf. Flammschutzadditive aufweisen.

Es ist von Vorteil, wenn der Profilkörper bzw der jeweilige Profilkörper Additive zur Verbesserung der Wärmeleitfähigkeit, wie beispielsweise Bornitrid, Bariumsulfat, Aluminiumnitrid, Zinkoxid, Zinksulfid, Zirkonoxid, Wollastonit, Kreide, Kohlenstoffmodifikationen und Mischungen hiervon, aufweist.

Der Profilkörper bzw der jeweilige Profikörper kann zudem eine Dekor- bzw. Lackschicht auf der Basis Acrylat und/oder Urethanacrylat aufweisen. Diese Lackschicht dient neben dekorativen Zwecken auch zur Verbesserung der Oberflächenbeständigkeit, wie beispielsweise Kratzbeständigkeit und/oder Beständigkeit gegen Reinigungsmitteln und/oder Umwelteinflüssen.

Insbesondere kann der Rahmen auch durch wenigstens eine Armierung bzw. wenigstens eine metallische Armierung verstärkt sein, wodurch die mechanische Stabilität zusätzlich wirksam erhöht werden kann. Die metallische Armierung kann z.B. in Form einer bandförmigen Armierung ausgebildet sein. Insbesondere kann die Armierung z.B. aus Edelstahl und/oder Stahl und/oder Kupfer und/oder Aluminium und/oder Legierungen mit Kupfer bestehen oder solche enthalten. Die Armierugn kann z.B. auch Polymerfasern und/oder Glasfasern und/oder Kohlefasern (z.B. in Form von Tapes) und/oder Gewebe und/oder Gelege und/oder Flechtungen und/oder harzgeträgerte Endlosfasern aufweisen.

Wenn in den obigen und den nachfolgenden Ausführungen von der "Lichtdurchlässigkeit" die Rede ist, so ist damit gemeint, dass diese Lichtdurchlässigkeit zumindest für einen Teil des Spektrums des sichtbaren Lichts, vorzugsweise für das gesamte Spektrum des sichtbaren Lichts vorliegt.

### Kurzbeschreibung der Zeichnung

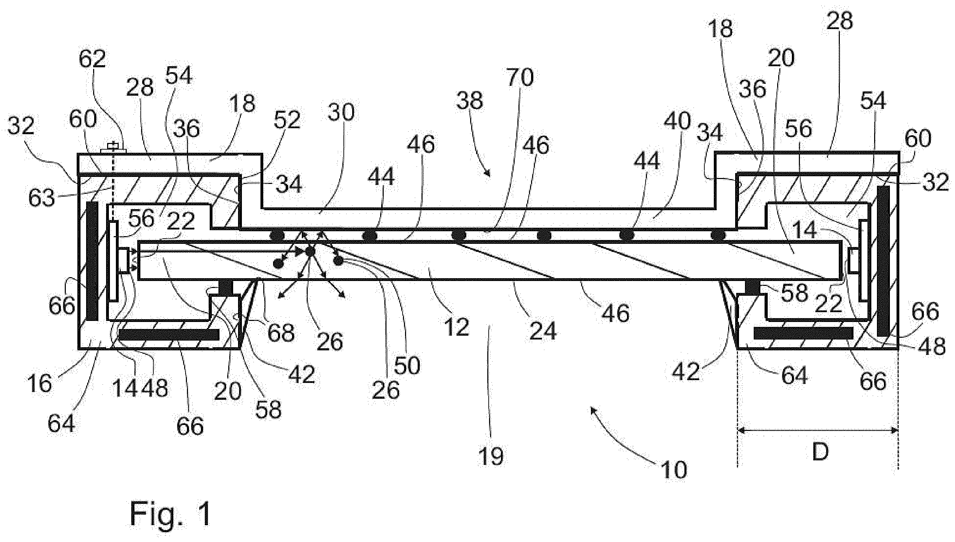

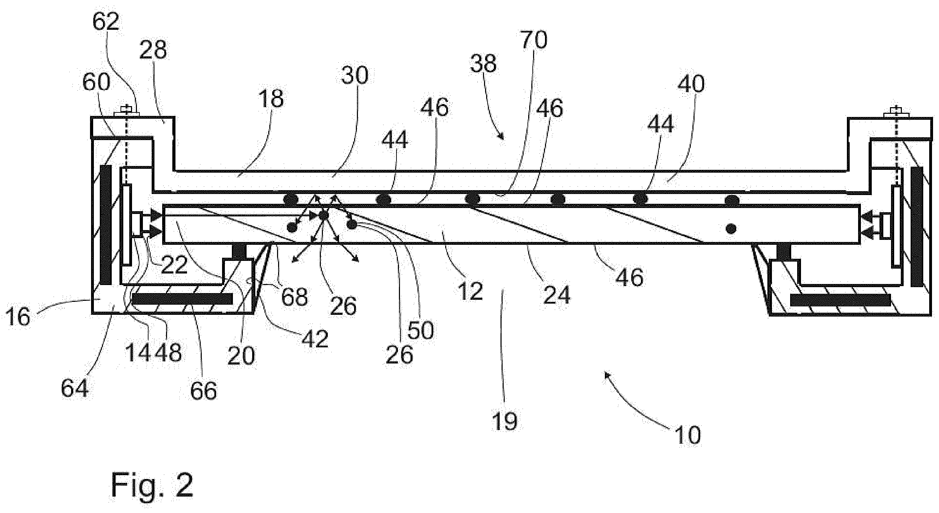

Nachfolgend werden zwei Ausführungsbeispiele der Erfindung anhand der beigefügten Zeichnung näher erläutert, in welcher die Fig. 1 eine schematische Schnittdarstellung eines ersten Ausführungsbeispiels und die Fig. 2 eine schematische Schnittdarstellung eines zweiten Ausführungsbeispiels einer erfindungsgemäßen Leuchtvorrichtung zeigt.

Die Fig. 1 der Zeichnung zeigt eine schematische Schnittdarstellung einer erfindungsgemäßen Leuchtvorrichtung 10.

Die Leuchtvorrichtung 10 nach der Figur umfasst eine Lichtleiterplatte 12, einer Mehrzahl von Leuchtdioden 14 zum Erzeugen von in die Lichtleiterplatte 12 einkoppelnden bzw. einstrahlenden Lichts, einen umlaufenden Rahmen 16 und ein Versteifungselement 18. Von den Leuchtdioden 14 sind in der Schnittdarstellung nur zwei veranschaulicht.

Der Rahmen 16 umgrenzt bzw. begrenzt einen Durchgang 19 bzw. einen inneren Bereich 19.

Ein umlaufender Rand 20 bzw. ein umlaufender Randabschnitt 20 der Lichtleiterplatte 12 ist in dem Rahmen 16 aufgenommen.

Die Lichtleiterplatte 12 weist eine umlaufende Seitenfläche 22 und eine Lichtaustrittsfläche 24 aufweist. Die Lichtaustrittsfläche 24 ist an einer von zwei entgegengesetzten Deckflächen 46 bzw. Großflächen 46 der Lichtleiterplatte 12 vorgesehen, wobei jede Deckfläche bzw. Großfläche 46 bei dem hier veranschaulichten Ausführungsbeispiel rechtwinkelig zu der umlaufenden Seitenfläche orientiert ist bzw. ausgerichtet ist.

Die Leuchtdioden 14 sind entlang der umlaufenden Seitenfläche 22 der Lichtleiterplatte 12 aufeinanderfolgend angeordnet (in der vorliegenden Schnittdarstellung nicht veranschaulicht).

Der umlaufende Randabschnitt 20 der Lichtleiterplatte12 ist in einem zu dem Durchgang 19 hin offen Hohlraum 54 des Rahmens 16 aufgenommen bzw. angeordnet. Die Lichtleiterplatte 12 ist ferner flächig mit einem umlaufenden Auflageelement 58 des Rahmens 16 verbunden.
Der Hohlraum 54 erstreckt sich umlaufend um den Durchgang 19. Die Leuchtdioden 14 sind in dem umlaufenden Hohlraum 54 angeordnet. Die Leuchtdioden 14 sind auf einer in dem Hohlraum 54 angeordneten Platine 56 gehalten, über welche den Leuchtdioden 14 insbesondere Steuersignale und Versorgungströme zugeführt werden bzw. zugeführt werden können. Die Platine 56 ist in dem Hohlraum 54 an dem Rahmen 16 gehalten.

Das von jeder der Leuchtdiode 14 erzeugbare Licht (vgl. schematische Pfeile) trifft zum Einkoppeln bzw. Einstrahlen in die Lichtleiterplatte 12 auf die umlaufende Seitenfläche 22 der Lichtleiterplatte 12. Hierfür weist jede Leuchtdiode 14 eine der umlaufenden Seitenfläche 22 zugewandte Leuchtenlicht-Austrittsfläche 48 für von der Leuchtdiode 14 ausgestrahltes Licht auf.

Die Lichtleiterplatte 12 weist eine Vielzahl von Mitteln 26 in Form von Streukörpern 50 zum Auskoppeln bzw. Umlenken des von der umlaufenden Seitenfläche 22 in die Lichtleiterplatte 12 eingekoppelten Lichts bzw. Leuchtdiodenlichts (vgl. auch entsprechende Licht-Pfeile) durch die Lichtaustrittsfläche 24 hindurch auf (bzw. aus dieser heraus in die Umgebung auf).Das Auskoppeln bzw. Umlenken des Lichts bzw. Leuchtdioden-Lichts erfolgt durch Streuen des eingekoppelten Lichts an den Streukörpern 50. Das Versteifungselement 18 weist eine der Lichtleiterplatte 12 zugewandte Fläche auf, die in Form einer Reflexionsfläche 70 ausgebildet ist, an welcher das Leuchtenlicht, das durch Streukörper 50 zu dem Versteifungselement 18 hin gestreut wird, in die Lichtleiterplatte 12 zurückreflektiert wird (wie durch entsprechende Licht-Pfeile veranschaulicht).

Das Versteifungselement 18 umfasst einen umlaufenden Randbereich 28 und einen mittleren Bereich 30. Der umlaufende Randbereich 28 ist mit einer umlaufenden Außenfläche 32 des Rahmens 16 flächig und stoffschlüssig verbunden, und zwar über eine umlaufende Klebstoffschicht 60, die sich umlaufend um den Durchgang 19 erstreckt. Der mittlere Bereich 30 (bzw. ein Endabschnitt des mittleren Bereichs 30) ist in dem Durchgang 19 aufgenommen bzw. in einem Endabschnitt des Durchgangs 19 aufgenommen und weist eine umlaufende Außenfläche 34 auf, die über eine umlaufende Klebstoffschicht 52 flächig und stoffschlüssig mit einer umlaufenden Innenfläche 36 des Rahmens 16 verbunden ist, welche einen oberen Abschnitt des Durchgangs 19 bzw. einen Endabschnitt des Durchgangs 19 umgrenzt.

Der mittlere Bereich 30 ist wannenförmig ausgebildet und weist eine Vertiefung 38 aufweist. Die umlaufende Außenfläche 34 ist an einer Wandung 40 des Versteifungselements 18 vorgesehen ist, welche die Vertiefung 38 begrenzt.

Die Leuchtvorrichtung 10 weist eine umlaufende Dichtung 42 aus Gummi auf, die einen umlaufenden flächigen Kontakt 68 zu der Lichtaustrittsfläche 24 und einen umlaufenden flächigen Kontakt 68 zu dem Rahmen 16 aufweist. Durch die Dichtung 42 kann vorteilhaft ein Eindringen von Flüssigkeit über den Bereich zwischen der Deckfläche 46 mit der Lichtaustrittsfläche 24 und dem Rahmen 16 vermieden werden.

Die Lichtleiterplatte 12 ist durch eine Mehrzahl von stoffschlüssigen Verbindungen 44 in Form von Klebstoffverbindungen 44 mit dem Versteifungselement 18 stoffschlüssig verbunden und durch die Klebstoffverbindungen 44 von dem Versteifungselement 18 beabstandet.

Ein äußerer sehr schematisch dargestellter Stecker 62 der Leuchtvorrichtung 10 dient dem Anschluss an eine Stromversorgungsquelle und an eine Steuersignalquelle (nicht veranschaulicht), wobei eine zum Weiterleiten von Versorgungsstrom und Steuersignalen eingerichtete Leitung 63 in den Rahmen 16 dicht eingebettet ist und an den Stecker 62 und an die Platine 56 in dem Hohlraum 54 angeschlossen ist. Bei dem Stecker 62 handelt es sich um einen spritzgegossenen Stecker 62 aus einem Kunststoffmaterial.

Der Rahmen 16 umfasst vier längliche Profilkörper 64, die stoffschlüssig miteinander verbunden sind, wobei jeder Profilkörper 64 vorzugsweise zwei auf Gehrung geschnittene Stirnseiten aufweist. Jeder Profilkörper 64 weist eine Breite D unterhalb von sechs Millimetern auf. Die Lichtleiterplatte 12 weist eine Dicke von ca. 4 mm auf. Jeder Profilkörper 64 ist mit zwei metallischen Armierungen 66 verstärkt.

Das Auflageelement 58 kann alternativ auch besonders vorteilhaft einen kleineren Abstand zu der Platine 56 aufweisen. Dies bringt den Vorteil mit sich, dass das Auflageelement 58 einen größeren Abstand zu dem Zentrum der Lichtaustrittsfläche 24 aufweist, wodurch die Homogenität der Lichtabstrahlung durch die Lichtaustrittsfläche 24 wesentlich verbessert werden kann.

Die Leuchtvorrichtung 10 gemäß der Fig. 2 unterscheidet sich von der Leuchtvorrichtung 10 nach Fig.1 dadurch, dass der Bereich des Durchgangs 19 des Rahmens 16, welcher das Versteifungselement 18 aufnimmt, größer ist als die größte Ausdehnung der Lichtleiterplatte 12. Durch diese bereichsweise Vergrößerung des Durchgangs 19 kann zur Vereinfachung der Herstellung bzw. Montage der Leuchtvorrichtung 10 der Verbund aus dem Versteifungselement 18 und der Lichtleiterplatte 12 einfach in den Rahmen 16 eingesetzt werden.

### Bezugszeichenliste

- 10: Leuchtvorrichtung
- 12: Lichtleiterplatte
- 14: Leuchtdiode
- 16: Rahmen
- 18: Versteifungselement
- 19: Durchgang
- 20: umlaufender Randabschnitt Lichtleiterplatte
- 22: umlaufende Seitenfläche
- 24: Lichtaustrittsfläche
- 26: Mittel zum Auskoppeln
- 28: umlaufender Randbereich Versteifungselement
- 30: mittlerer Bereich
- 32: umlaufende Außenfläche Rahmen
- 34: umlaufende Außenfläche mittlerer Bereich Versteifungselement
- 36: Innenfläche Rahmen
- 38: Vertiefung
- 40: Wandung Versteifungselement
- 42: Dichtung
- 44: stoffschlüssige Verbindung
- 46: Deckfläche
- 48: Leuchtenlicht-Austrittsfläche
- 50: Streukörper
- 52: Klebstoffschicht
- 54: Hohlraum
- 56: Platine
- 58: Auflageelement
- 60: Klebstoffschicht
- 62: Stecker
- 63: Leitung
- 64: Profilkörper
- 66: Armierung
- 68: flächiger Kontakt
- 70: Reflexionsfläche

## Patentansprüche

1. Leuchtvorrichtung (10) mit einer Lichtleiterplatte (12), wenigstens einer Leuchtdiode (14) zum Erzeugen von in die Lichtleiterplatte (12) einkoppelnden Lichts, einem umlaufenden Rahmen (16) und einem Versteifungselement (18),
- wobei der Rahmen (16) einen Durchgang (19) umgrenzt,
- wobei ein umlaufender Randabschnitt (20) der Lichtleiterplatte (12) in dem Rahmen (16) aufgenommen ist,
- wobei die Lichtleiterplatte (12) eine umlaufende Seitenfläche (22) und wenigstens eine Lichtaustrittsfläche (24) aufweist,
- wobei von der Leuchtdiode (14) erzeugbares Licht zum Einkoppeln in die Lichtleiterplatte (12) auf die umlaufende Seitenfläche (22) der Lichtleiterplatte (12) trifft,
- wobei wenigstens ein Mittel (26) zum Auskoppeln des von der umlaufenden Seitenfläche (22) in die Lichtleiterplatte (12) eingekoppelten Lichts durch die Lichtaustrittsfläche (24) hindurch vorgesehen ist,
- wobei das Versteifungselement (18) einen umlaufenden Randbereich (28) und einen mittleren Bereich (30) umfasst,
- wobei der umlaufende Randbereich (28) mit einer umlaufenden Außenfläche (32) des Rahmens (16) flächig und stoffschlüssig verbunden ist, und
- wobei der mittlere Bereich (30) in dem Durchgang (19) aufgenommen ist.

2. Leuchtvorrichtung (10) nach Anspruch 1, **dadurch gekennzeichnet, dass** der mittlere Bereich (30) des Versteifungselements (18) in dem Durchgang (19) kraftschlüssig aufgenommen ist.

3. Leuchtvorrichtung (10) nach Anspruch 1, **dadurch gekennzeichnet, dass** der mittlere Bereich (30) des Versteifungselements (18) eine umlaufende Außenfläche (34) aufweist, wobei die umlaufende Außenfläche (34) flächig und stoffschlüssig mit einer Innenfläche (36) des Rahmens (16) verbunden ist.

4. Leuchtvorrichtung (10) nach Anspruch 3, **dadurch gekennzeichnet**, das der mittlere Bereich (30) eine Vertiefung (38) aufweist, wobei die umlaufende Außenfläche (34) an einer Wandung (40) des Versteifungselements (18) vorgesehen ist, welche die Vertiefung (38) begrenzt.

5. Leuchtvorrichtung (10) nach einem der vorangehenden Ansprüche, **dadurch gekennzeichnet, dass** die Leuchtvorrichtung (10) eine umlaufende Dichtung (42) aufweist, die einen umlaufenden flächigen Kontakt (68) zu der Lichtaustrittsfläche (24) und einen umlaufenden flächigen Kontakt (68) zu dem Rahmen (16) aufweist.

6. Leuchtvorrichtung (10) nach einem der vorangehenden Ansprüche, **dadurch gekennzeichnet, dass** die Lichtleiterplatte (12) durch eine Mehrzahl von stoffschlüssigen Verbindungen (44) mit dem Versteifungselement (18) stoffschlüssig verbunden und durch die stoffschlüssigen Verbindungen (44) von dem Versteifungselement (18) beabstandet ist.

## Claims

1. A lighting device (10) comprising a light guide plate (12), at least one LED (14) for generating light coupling into the light guide plate (12), a peripheral frame (16) and a stiffening element (18),
- wherein the frame (16) surrounds a through-passage (19),
- wherein a peripheral edge portion (20) of the light guide plate (12) is accommodated in the frame (16),
- wherein the light guide plate (12) has a peripheral side surface (22) and at least one light exit surface (24),
- wherein light generatable by the LED (14) for coupling into the light guide plate (12) impinges on the peripheral side surface (22) of the light guide plate (12),
- wherein at least one arrangement (26) is provided for coupling the light coupled into the light guide plate (12) from the peripheral side surface (22) out through the light exit surface (24),
- wherein the stiffening element (18) comprises a peripheral edge region (28) and a central region (30),
- wherein the peripheral edge region (28) is materially connected to a peripheral outer surface (32) of the frame (16) in a planar manner, and
- wherein the central region (30) is accommodated in the through-passage (19).

2. The lighting device (10) according to claim 1, **characterised in that** the central region (30) of the stiffening element (18) is accommodated in the through-passage (19) in a force-fitting manner.

3. The lighting device (10) according to claim 1, **characterised in that** the central region (30) of the stiffening element (18) has a peripheral outer surface (34), wherein the peripheral outer surface (34) is materially connected to an inner surface (36) of the frame (16) in a planar manner.

4. The lighting device (10) according to claim 3, **characterised in that** the central region (30) comprises a depression (38), wherein the peripheral outer surface (34) is provided on a wall (40) of the stiffening element (18) that delimits the depression (38).

5. The lighting device (10) according to one of the preceding claims, **characterised in that** the lighting device (10) comprises a peripheral seal (42), which comprises a peripheral planar contact (68) with the light exit surface (24) and a peripheral planar contact (68) with the frame (16).

6. The lighting device (10) according to one of the preceding claims, **characterised in that** the light guide plate (12) is materially connected to the stiffening element (18) by a plurality of substance-to-substance bonds (44) and is spaced apart from the stiffening element (18) by the substance-to-substance bonds (44).

## Revendications

1. Dispositif d'éclairage (10) comprenant une platine guide optique (12), au moins une diode électroluminescente (14) destinée à générer de la lumière s'injectant dans la platine guide optique (12), un cadre (16) périphérique et un élément de renforcement (18),
- le cadre (16) entourant un passage (19),
- une partie de bord (20) périphérique de la platine guide optique (12) étant reçue dans le cadre (16),
- la platine guide optique (12) comportant une surface latérale (22) périphérique et au moins une surface de sortie de lumière (24),
- de la lumière pouvant être générée par la diode électroluminescente (14) rencontrant la surface latérale périphérique (22) de la platine guide optique (12) pour être injectée dans la platine guide optique (12),
- au moins un moyen (26) étant prévu pour extraire, à travers la surface de sortie de lumière (24), la lumière injectée dans la platine guide optique (12) depuis la surface latérale périphérique (22),
- l'élément de renforcement (18) comprenant une zone de bord (28) périphérique et une zone médiane (30),
- la zone de bord (28) périphérique étant reliée par sa surface et par coopération de matières à une surface extérieure (32) périphérique du cadre (16), et
- la zone médiane (30) étant reçue dans le passage (19).

2. Dispositif d'éclairage (10) selon la revendication 1, **caractérisé en ce que** la zone médiane (30) de l'élément de renforcement (18) est reçue par adhérence dans le passage (19).

3. Dispositif d'éclairage (10) selon la revendication 1, **caractérisé en ce que** la zone médiane (30) de l'élément de renforcement (18) comporte une surface extérieure (34) périphérique, la surface extérieure (34) périphérique étant reliée par sa surface et par coopération de matières à une surface intérieure (36) du cadre (16).

4. Dispositif d'éclairage (10) selon la revendication 3, **caractérisé en ce que** la zone médiane (30) comporte un creux (38), la surface extérieure (34) périphérique étant prévue sur une paroi (40) de l'élément de renforcement (18), qui borde le creux (38).

5. Dispositif d'éclairage (10) selon l'une des revendications précédentes, **caractérisé en ce que** le dispositif d'éclairage (10) comporte un joint d'étanchéité (42) périphérique, qui présente un contact de surface (68) périphérique avec la surface de sortie de lumière (24) et un contact de surface (68) périphérique avec le cadre (16).

6. Dispositif d'éclairage (10) selon l'une des revendications précédentes, **caractérisé en ce que** la platine guide optique (12) est reliée par coopération de matières à l'élément de renforcement (18) par une pluralité de liaisons par coopération de matières (44) et est espacée de l'élément de renforcement (18) par les liaisons par coopération de matières (44).
